# EUROPEAN PATENT APPLICATION

(11) **EP 4 610 317 A1**
(43) Date of publication of application: **03.09.2025**
(21) Application number: 23882565.7
(22) Date of filing: 20.10.2023
(51) Int. Cl.: C09D 11/037, B41M 3/14, C09C 1/00, C09C 3/10

(54) **COMPOSITION FOR ANTI-COUNTERFEIT INK, AND ANTI-COUNTERFEIT PRINTED MATTER**

(30) Priority: 25.10.2022 JP 2022170551
(71) Applicant: SUMITOMO METAL MINING CO., LTD., Tokyo 105-8716 (JP)
(72) Inventor: CHONAN, Takeshi, Isa-shi, Kagoshima 895-2501 (JP); IGARI, Atsushi, Isa-shi, Kagoshima 895-2501 (JP)
(74) Representative: Jones, Nicholas Andrew
(86) International application number: PCT/JP2023/038098
(87) International publication number: WO 2024/090360

(57) **Abstract**

A forgery-proof ink composition contains organic-inorganic hybrid infrared absorbing particles, and a liquid medium. The organic-inorganic hybrid infrared absorbing particles contain 15% by mass or greater and 55% by mass or less of infrared absorbing particles, and a coating resin coating at least parts of surfaces of the infrared absorbing particles.

## Description

### TECHNICAL FIELD

The present invention relates to a forgery-proof ink composition and a forgery-proof printed matter.

### BACKGROUND ART

Conventionally, methods for preventing forgery of valuable printed matter, such as deposit passbooks, identification papers, credit cards, cash cards, checks, airline tickets, road toll tickets, train tickets, prepaid cards, gift certificates, securities, and the like have been studied. As a method for preventing forgery of valuable printed matter, special contrivances have been applied to the base materials of the printed matter and to the printing methods.

In order to prevent forgery, for example, latent image printing (see PTL 1), digital processing using printing of geometric shapes represented by barcodes, and the like have been put into practice. However, barcode printing can be easily forged by copying and the like. In addition, latent image printing is poorly forgery-preventive and not versatile because of inclusion of an ambiguous factor, i.e., confirmation by human eyes or the like.

As a forgery prevention method other than the above, there has been proposed a method of detecting the authenticity information of printed matter, involving use of a printing ink that does not absorb much visible light having a wavelength of 300 nm to 780 nm and does absorb near-infrared light having a wavelength of 800 nm to 2,400 nm. For example, printed matter of an ink, in which a near-infrared absorbing material that does not absorb much visible light is mixed with a binder resin, absorbs only a specific wavelength when the print surface thereof is irradiated with an infrared laser. Therefore, it is possible to determine the authenticity by reading reflected or transmitted light.

As a printing ink that absorbs near-infrared light, a security ink using a phthalocyanine compound has been proposed (see PTL 2). However, the phthalocyanine compound, which is a near-infrared absorbing material, has a drawback of being poor at weather resistance because its absorption characteristic decreases under the effects of temperature, ultraviolet light, and the like.

Meanwhile, a dispersion film containing particles of a hexaboride of Y, La, or the like, ruthenium oxide particles, or the like is known as a solar radiation absorbing film that insulates heat by absorbing near-infrared light of sunlight, and an idea of applying this film to a forgery-proof ink has been proposed (see PTL 3). However, when the solar radiation absorbing film is applied to a forgery-proof ink, the contrast of light absorption to light transmission or reflection might not be sufficient with respect to a wavelength range of light to be transmitted through or reflected by the applied ink, and with respect to a wavelength range of light to be absorbed by the applied ink. Therefore, depending on the use, the reading accuracy or the like during use as a forgery-proof ink may be poor.

The present applicant has disclosed a forgery-proof ink containing complex tungsten oxide particles that have a contrast of near-infrared absorption to visible light transmission or reflection higher than that of existing materials and have excellent weather resistance (see PTL 4). However, according to the study of the inventors of the present invention, it has become known that the infrared absorption characteristic of the forgery-proof ink and forgery-proof printed matter decreases when they are exposed to an environment in which a chemical, such as an acid, an alkali, or the like is at a high temperature, because the infrared absorbing particles described in PTL 4 do not have a sufficient chemical resistance characteristic.

Therefore, the present applicant has disclosed a forgery-proof ink composition, a forgery-proof ink, and forgery-proof printed matter having excellent chemical resistance characteristic (see PTL 5). According to the study of the inventors of the present invention, it has become known that infrared absorbing particles described in PTL 5 have a sufficient chemical resistance characteristic, but have room for improvement in terms of infrared absorption characteristic.

### CITATION LIST

### PATENT LITERATURE

PTL 1: Japanese Patent Application Laid-Open Publication No. 05-338388
PTL 2: Japanese Patent Application Laid-Open Publication No. 04-320466
PTL 3: Japanese Patent Application Laid-Open Publication No. 2004-168842
PTL 4: Japanese Patent Application Laid-Open Publication No. 2015-117353
PTL 5: Japanese Patent Application Laid-Open Publication No. 2020-196850

### SUMMARY OF THE INVENTION

### TECHNICAL PROBLEM

It is an object of the present invention to provide a forgery-proof ink composition having excellent infrared absorption characteristics and excellent chemical resistance characteristics.

### SOLUTION TO THE PROBLEM

According to an aspect of the present invention, a forgery-proof ink composition is provided, that contains:
organic-inorganic hybrid infrared absorbing particles; and
a liquid medium,
wherein the organic-inorganic hybrid infrared absorbing particles contain 15% by mass or greater and 55% by mass or less of infrared absorbing particles, and a coating resin coating at least parts of surfaces of the infrared absorbing particles.

### ADVANTAGEOUS EFFECTS OF THE INVENTION

According to an aspect of the present invention, it is possible to provide a forgery-proof ink composition having excellent infrared absorption characteristics and excellent chemical resistance characteristics.

### BRIEF DESCRIPTION OF THE DRAWINGS

[FIG. 1] FIG. 1 is an illustrative view of the crystal structure of a hexagonal crystal of a complex tungsten oxide.
[FIG. 2] FIG. 2 is a schematic cross-sectional view of an organic-inorganic hybrid infrared absorbing particle of this embodiment.
[FIG. 3] FIG. 3 is a schematic diagram of a forgery-proof ink composition of this embodiment.

### DETAILED DESCRIPTION OF THE INVENTION

Although embodiments for carrying out the present invention will be described below with reference to the drawings, the present invention is not limited to the following embodiments, and various modifications and substitutions are applicable to the following embodiments without departing from the scope of the present invention.

### [Forgery-Proof Ink Composition]

A forgery-proof ink composition of the present embodiment may contain organic-inorganic hybrid infrared absorbing particles and a liquid medium.

The organic-inorganic hybrid infrared absorbing particles may contain infrared absorbing particles and a coating resin coating at least parts of the surfaces of the infrared absorbing particles. The organic-inorganic hybrid infrared absorbing particles can contain 15% by mass or greater and 55% by mass or less of infrared absorbing particles.

As described above, infrared absorbing particles have been used in forgery-proof inks and the like, but there have been cases where the chemical resistance characteristic of the infrared absorbing particles is not sufficient.

Therefore, the inventors of the present invention have intensively studied a method for producing infrared absorbing particles having excellent infrared absorption characteristics and excellent chemical resistance characteristics.

As a result, the inventors have focused on producing organic-inorganic hybrid infrared absorbing particles by directly placing an organic material such as a resin and the like on at least part of the surfaces of infrared absorbing particles. Furthermore, the inventors have found that organic-inorganic hybrid infrared absorbing particles in which the content ratio of infrared absorbing particles is 15% by mass or greater and 55% by mass or less, which have been particularly difficult to produce until now, can achieve both of excellent infrared absorption characteristics and excellent chemical resistance characteristics. The inventors have found that use of such organic-inorganic hybrid infrared absorbing particles enables producing a forgery-proof ink composition and a forgery-proof printed matter having excellent infrared absorption characteristic and chemical resistance characteristic, and have completed the present invention.

Infrared absorbing particles are usually inorganic materials, and it has been difficult to place an organic material such as resin and the like on at least part of the surfaces thereof. Therefore, no organic-inorganic hybrid infrared absorbing particles or no method for producing the same have been known. In particular, no method for producing organic-inorganic hybrid infrared absorbing particles in which the content ratio of infrared absorbing particles is high, as described above, has been known. Therefore, the inventors of the present invention have conducted studies and found organic-inorganic hybrid infrared absorbing particles that have an organic material on at least parts of the surfaces of the infrared absorbing particles and in which the content ratio of the infrared absorbing particles is high, and a method for producing the same.

Therefore, first, a method for producing organic-inorganic hybrid infrared absorbing particles and organic-inorganic hybrid infrared absorbing particles will be described.

### 1. Method for Producing Organic-Inorganic Hybrid Infrared Absorbing Particles

The method for producing organic-inorganic hybrid infrared absorbing particles may include, for example, a dispersion liquid preparation step, a dispersion medium reducing step, a raw material mixture liquid preparation step, a stirring step, and a polymerization step described below.

In the dispersion liquid preparation step, a dispersion liquid containing infrared absorbing particles, a dispersant, and a dispersion medium can be prepared.

In the dispersion medium reducing step, the dispersant can be evaporated from the dispersion liquid.

In the raw material mixture liquid preparation step, the infrared absorbing particles recovered after the dispersion medium reducing step, a coating resin raw material, an organic solvent, an emulsifier, water, and a polymerization initiator can be mixed, to prepare a raw material mixture liquid.

In the stirring step, the raw material mixture liquid can be stirred while being cooled.

In the polymerization step, a polymerization reaction of the coating resin raw material can be carried out after deoxidation treatment to reduce the amount of oxygen in the raw material mixture liquid.

Each step will be described below.

### (1) Dispersion Liquid Preparation Step

In the dispersion liquid preparation step, a dispersion liquid containing infrared absorbing particles, a dispersant, and a dispersion medium can be prepared.

The materials that can be suitably used in preparing the dispersion liquid in the dispersion liquid preparation step will be described below.

### (a) Infrared Absorbing Particles

### (Composition and the Like)

In the dispersion liquid preparation step, as infrared absorbing particles, various types of infrared absorbing particles that are required to have enhanced chemical resistance characteristics, e.g., acid resistance and alkaline resistance, can be used. As the infrared absorbing particles, it is preferable to use infrared absorbing particles containing various materials containing free electrons, and it is more preferable to use infrared absorbing particles containing various inorganic materials containing free electrons.

As the infrared absorbing particles, it is particularly preferable to use infrared absorbing particles containing one or more types selected from oxygen deficiency-containing tungsten oxides and complex tungsten oxides. Specifically, it is preferable that the infrared absorbing particles contain one or more types selected from tungsten oxides represented by a general formula W_{y}O_{z} (W: tungsten, O: oxygen, 2.2<z/y<2.999), and complex tungsten oxides represented by a general formula MₓW_{y}O_{z} (where the element M is one or more types selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I, 0.001≤x/y≤1, 2.0≤z/y<4.0).

In general, it is known that materials containing free electrons exhibit plasma oscillation-based reflection/absorption responses to electromagnetic waves around the sunlight wavelength range of 200 nm to 2,600 nm. Therefore, various materials containing free electrons can be suitably used as infrared absorbing particles. It is preferable to use, for example, particles smaller than wavelengths of light as the infrared absorbing particles because such particles can reduce geometric scattering in the visible light range (wavelength range of 380 nm to 780 nm), and can achieve an especially high transparency in the visible light range.

In this specification, the term "transparent" is used in the sense of "having a high transmissivity to light in the visible light range with little scattering".

In general, tungsten oxide (WO₃) free of effective free electrons has a poor absorption/reflection characteristic with respect to the infrared range, and is not effective as infrared absorbing particles.

On the other hand, oxygen deficiency-containing WO₃, and complex tungsten oxides, which are versions of the WO₃, to which an electropositive element such as Na or the like is added, are known to be conductive materials and have free electrons. Analyses of single crystals of these materials that have free electrons suggest the free electrons' responses to light in the infrared range.

According to the study of the inventors of the present invention, the range of compositions of the tungsten and oxygen includes, in a specific part thereof, a range that is particularly effective for infrared absorbing materials. By formulating compositions of tungsten and oxygen within the specific range that is particularly effective for infrared absorbing materials, it is possible to obtain tungsten oxides and complex tungsten oxides that are transparent in the visible light range and have particularly strong absorption in the infrared range.

Therefore, tungsten oxides and complex tungsten oxides that are one type of infrared absorbing particle materials that can be suitably used in the dispersion liquid preparation step will be described below.

### (a1) Tungsten Oxides

Tungsten oxides are represented by a general formula W_{y}O_{z} (where W is tungsten, O is oxygen, and 2.2≤z/y≤2.999).

In the tungsten oxides represented by the general formula W_{y}O_{z}, the range of compositions of the tungsten and oxygen, expressed by the compositional ratio of oxygen to tungsten (z/y), is preferably less than 3, more preferably 2.2≤z/y≤2.999, and particularly more preferably 2.45≤z/y≤2.999.

When the value z/y is 2.2 or greater, it is possible to avoid the appearance of an undesired WO₂ crystalline phase in the tungsten oxides, and to obtain chemical stability as materials, resulting in particularly effective infrared absorbing particles.

In addition, when the value z/y is adjusted to be less than 3 preferably, and to be 2.999 or less more preferably, a particularly sufficient amount of free electrons for enhancing the absorption/reflection characteristics in the infrared range are generated, resulting in efficient infrared absorbing particles.

In addition, what are generally referred to as "Magnelli phases" that have a compositional ratio of 2.45≤z/y≤2.999 are chemically stable, have excellent light absorption characteristics in the near-infrared range, and can be more suitably used as infrared absorbing materials. Therefore, it is further preferable that the value z/y is 2.45≤z/y≤2.999 as already described.

### (a2) Complex Tungsten Oxides

Complex tungsten oxides are obtained by adding the element M, which will be described later, to the WO₃ described above.

Addition of the element M to obtain a complex tungsten oxide generates free electrons in WO₃, which hence expresses a strong absorption characteristic attributable to the free electrons and becomes effective as infrared absorbing particles that absorb near-infrared rays having a wavelength of around 1,000 nm.

In other words, complex tungsten oxides, which are versions of the WO₃, to which oxygen amount control and addition of the free electron-generating element M are applied in combination, can exhibit more efficient infrared absorption characteristics. In the general formula MₓW_{y}O_{z} representing the complex tungsten oxides, which are versions of the WO₃, to which oxygen amount control and addition of the free electron-generating element M are applied in combination, it is preferable that the relationships 0.001≤x/y≤1 and 2.0≤z/y<4.0 are satisfied. M in the general formula represents the element M, W represents tungsten, and O represents oxygen.

As described above, when the value x/y, which indicates the addition amount of the element M, is 0.001 or greater, a particularly sufficient amount of free electrons are generated in the complex tungsten oxides, and a high infrared absorption effect can be obtained. The greater the addition amount of the element M, the greater the amount of free electrons to be supplied and the higher the infrared absorption efficiency. However, the effect is saturated when the value x/y is approximately 1. When the value x/y is 1 or less, there is an advantage that generation of impurity phases in the infrared absorption particles containing the complex tungsten oxides can be avoided.

It is preferable that the element M is one or more types selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I.

It is more preferable that the element M is one or more elements selected from Li, Na, K, Rb, Cs, Fr, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, and Re in order to improve stability of MₓW_{y}O_{z}. It is yet more preferable that the element M is one or more elements selected from alkaline earth metal elements, transition metal elements, Group 4B elements, and Group 5B elements in order to improve optical characteristics and weather resistance characteristic as the infrared absorbing particles containing the complex tungsten oxide.

In the complex tungsten oxides represented by MₓW_{y}O_{z}, the same mechanism as that of the above-described tungsten oxides represented by W_{y}O_{z} works regarding the value z/y indicating the addition amount of oxygen. However, in the complex tungsten oxides, even when z/y=3.0 or the addition amount of oxygen exceeds 3.0 and is excessive, there is supply of free electrons based on the addition amount of the element M. Therefore, 2.0≤z/y<4.0 is preferable, 2.2≤z/y≤3.8 is more preferable, and 2.45≤z/y<3.6 is yet more preferable.

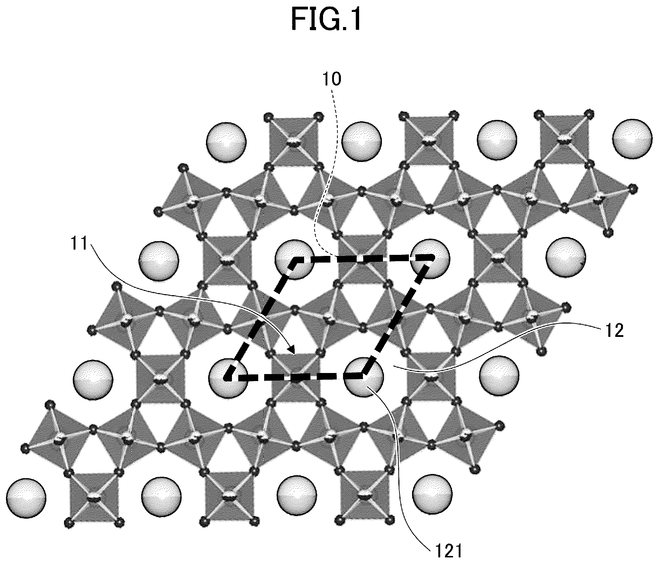

Furthermore, when the complex tungsten oxides have a hexagonal crystal structure, infrared absorbing particles containing the complex tungsten oxides have an improved transmission of light in the visible light range and an improved absorption of light in the infrared range. Referring to FIG. 1, which is a schematic plan view of the hexagonal crystal structure, the following description will be given.

FIG. 1 shows a projection of the crystal structure of a complex tungsten oxide having a hexagonal crystal structure when viewed in the (001) direction, and shows a unit cell 10 by a dotted line.

In FIG. 1, six octahedra 11 each formed of a WO₆ unit assemble to form a hexagonal void 12, and an element 121, which is the element M, is placed in the void 12. This constitutes one unit, and many such units assemble to form a hexagonal crystal structure.

In order to improve the transmission of light in the visible light range and the absorption of light in the infrared range, complex tungsten oxides may contain the unit structure described with reference to FIG. 1. Therefore, it does not matter whether the complex tungsten oxides are crystalline or amorphous.

When the cation of the element M is added and present in the hexagonal void described above, the transmission of light in the visible light range is improved, and the absorption of light in the infrared range is improved. In general, when an element M having a large ionic radius is added, the hexagonal crystal is likely to be formed. Specifically, when one or more types selected from Cs, K, Rb, Tl, In, Ba, Li, Ca, Sr, Fe, and Sn are added as the element M, the hexagonal crystal is likely to be formed. Naturally, any element M other than the elements mentioned above may be present in the hexagonal voids formed of the WO₆ units, and the above elements are non-limiting examples.

Since the complex tungsten oxides having the hexagonal crystal structure have a uniform crystal structure, the addition amount of the element is preferably 0.2 or greater and 0.5 or less, and more preferably 0.33 in terms of the value x/y in the above general formula. When the value x/y is 0.33, the above element M is considered to be placed in all hexagonal voids.

Infrared absorbing particles containing tetragonal crystal and cubic crystal complex tungsten oxides other than hexagonal crystals also have a sufficiently effective infrared absorption characteristic. There is a tendency that different crystal structures have absorption at different positions in the infrared range, and there is a tendency that a hexagonal crystal, a tetragonal crystal, and a cubic crystal respectively have absorption positions at longer wavelengths, in the stated order. Along with this, a hexagonal crystal, a tetragonal crystal, and a cubic crystal respectively absorbs less light in the visible light range, in the stated order. Therefore, it is preferable to use hexagonal crystal complex tungsten oxides for applications in which more transmission of light in the visible light range and more shielding of light in the infrared range are desired. However, the optical characteristic tendencies described so far are merely general tendencies, and the optical characteristics vary depending on the type and the addition amount of the additive element, and the amount of oxygen, and the present invention is not limited to these tendencies.

Infrared absorbing particles containing tungsten oxides and complex tungsten oxides greatly absorb light in the near-infrared range, especially around a wavelength of 1,000 nm. Therefore, the tone of the color transmitted through them is in the range of blue to green.

### (Dispersed Particle Diameter)

The dispersed particle diameter of the infrared absorbing particles is not particularly limited and can be selected according to the purpose of use and the like.

It is preferable that the infrared absorbing particles have a dispersed particle diameter of 800 nm or less when they are used in applications where transparency is desired. This is because particles having a dispersed particle diameter of 800 nm or less do not completely scatter and shield light, and can maintain visibility in the visible light range and efficiently maintain transparency at the same time. When the transparency in the visible light range is especially important, it is preferable to consider further reducing particles' scattering.

When reduction of particles' scattering is important, the dispersed particle diameter is preferably 200 nm or less, and more preferably 100 nm or less, because, when the dispersed particle diameter of the particles is small, the scattering of light in the visible light range at a wavelength of 380 nm or greater and a wavelength of 780 nm or less due to geometric scattering or Mie scattering is reduced, and because, as a result of the scattering of light in the visible light range being reduced by the dispersed particle diameter of the particles being reduced, it is possible to avoid, for example, an infrared absorption film, in which the infrared absorption particles are dispersed, becoming like frosted glass that cannot obtain a clear transparency, i.e., because, at the dispersed particle diameter of 200 nm or less, which is in the Rayleigh scattering range in which the geometric scattering or Mie scattering mentioned above is reduced, the scattering is reduced and the transparency is improved as the dispersed particle diameter is reduced, since in the Rayleigh scattering range, light to be scattered is reduced in proportion to the sixth power of the particle diameter.

Further, the dispersed particle diameter of 100 nm or less is preferable because light is very scarcely scattered. From the viewpoint of avoiding the scattering of light, it is preferable that the dispersed particle diameter is small.

Although the lower limit of the dispersed particle diameter of the infrared absorbing particles is not particularly limited, it is preferable that the dispersed particle diameter is 1 nm or greater because, for example, industrial production of the particles is easy.

By adjusting the dispersed particle diameter of the infrared absorbing particles to 800 nm or less, it is possible to adjust the haze value of an infrared absorbing particle dispersion body, which is obtained by dispersing the infrared absorbing particles in a medium, to a haze of 30% or less at a visible light transmittance of 85% or lower. By adjusting the haze to 30% or less, it is possible to avoid the infrared absorbing particle dispersion body becoming like frosted glass, and to obtain a particularly clear transparency.

The dispersed particle diameter of the infrared absorbing particles can be measured using ELS-8000 available from Otsuka Electronics Co., Ltd., which is based on the dynamic light scattering method.

### (Crystallite Diameter)

In order to exhibit excellent infrared absorption characteristic, the crystallite diameter of the infrared absorbing particles is preferably 1 nm or greater and 200 nm or less, more preferably 1 nm or greater and 100 nm or less, and yet more preferably 10 nm or greater and 70 nm or less. To measure the crystallite diameter, X-ray diffraction pattern measurement by powder X-ray diffraction method (θ-2θ method) and an analysis by the Rietveld method can be used. X-ray diffraction pattern measurement can be performed using, for example, a powder X-ray diffractometer "X'Pert-PRO/MPD" available from Spectris Co., Ltd., currently Panalytical.

### (b) Dispersant

The dispersant is used to hydrophobize the surface of the infrared absorbing particles. The dispersant can be selected in accordance with the dispersion system, which is the combination of the infrared absorbing particles, the dispersion medium, the coating resin raw material, and the like. Among dispersants, a dispersant containing one or more types selected from an amino group, a hydroxyl group, a carboxyl group, a sulfo group, a phospho group, and an epoxy group as functional groups can be suitably used. When the infrared absorbing particles are a tungsten oxide or a complex tungsten oxide, it is preferable that the dispersant contains an amino group as a functional group.

It is more preferable that the dispersant contains an amino group as a functional group as described above, i.e., that the dispersant is an amine compound. It is more preferable that the amine compound is a tertiary amine.

Since the dispersant is used for hydrophobizing the surface of infrared absorbing particles, it is preferable that the dispersant is a polymeric material. Therefore, it is preferable that the dispersant is, for example, a dispersant that contains one or more types selected from long-chain alkyl groups and benzene rings, and more preferably a polymeric dispersant containing a copolymer that contains styrene and 2-(dimethylamino) ethyl methacrylate, which is a tertiary amine, and that can be used more suitably for the coating resin raw material as well. It is preferable that the long-chain alkyl group contains eight or more carbon atoms. For example, a dispersant that is a polymeric material and is an amine compound as well can also be used.

The addition amount of the dispersant is not particularly limited and can be desirably selected. The suitable addition amount of the dispersant can be selected in accordance with the types of the dispersant and the infrared absorbing particles, the specific surface area of the infrared absorbing particles, and the like. For example, it is preferable to adjust the addition amount of the dispersant to 10 parts by mass or greater and 500 parts by mass or less relative to 100 parts by mass of the infrared absorbing particles, because it is easy to prepare a dispersion liquid having a particularly favorable dispersion state. The addition amount of the dispersant is more preferably 10 parts by mass or greater and 100 parts by mass or less, and more preferably 20 parts by mass or greater and 50 parts by mass or less.

### (c) Dispersion Medium

The dispersion medium may be anything as long as it can disperse the infrared absorbing particles and the dispersant to form a dispersion liquid. For example, various organic compounds can be used.

As the dispersion medium, for example, one or more types selected from aromatic hydrocarbons such as toluene, xylene, and the like can be suitably used.

In the dispersion liquid preparation step, the dispersion liquid can be prepared by mixing the infrared absorbing particles, the dispersant, and the dispersion medium. However, in order to reduce the dispersed particle diameter of the infrared absorbing particles and disperse the particles uniformly in the dispersion liquid, it is preferable to pulverize the infrared absorbing particles during mixing.

The mixing member used when mixing and pulverizing the infrared absorbing particles, the dispersant, and the dispersion medium is not particularly limited, and one or more types selected from bead mills, ball mills, sand mills, paint shakers, ultrasonic homogenizers, and the like can be used. In particular, as the mixing member, it is more preferable to use a media stirring mill such as a bead mill, a ball mill, a sand mill, a paint shaker, and the like using media such as beads, balls, Ottawa sand, and the like. This is because use of a media stirring mill is preferable from the viewpoint of productivity, as the infrared absorbing particles can be adjusted to a desired dispersed particle diameter in a particularly short time, and from the viewpoint of inhibition of impurity contamination.

### (2) Dispersion Medium Reducing Step

In the dispersion medium reducing step, the dispersion liquid can be dried by evaporation of the dispersion liquid.

In the dispersion medium reduction step, it is preferable that the dispersion medium is sufficiently evaporated from the dispersion liquid to recover the infrared absorbing particles.

A specific member for evaporating the dispersion medium is not particularly limited, and, for example, a dryer such as an oven and the like, a vacuum fluidized bed dryer such as an evaporator, a vacuum grinder, and the like, and an atomizing dryer such as a spray dryer and the like can be used.

The degree to which the dispersion medium is evaporated is not particularly limited, and it is preferable that the content ratio of the dispersion medium can be sufficiently reduced such that powdery infrared absorbing particles can be obtained after the dispersion medium reducing step.

By evaporating the dispersing medium, it is possible to obtain infrared absorbing particles of which surfaces are hydrophobized with the dispersant placed on the circumference of the infrared absorbing particles. Therefore, it is possible to enhance close adhesiveness between the thusly hydrophobized infrared absorbing particles and the coating resin to be produced from polymerization of the coating resin raw material, and to place the coating resin on at least parts of the surfaces of the infrared absorbing particles in the polymerization step and the like described later.

### (3) Raw Material Mixture Liquid Preparation Step

In the raw material mixture liquid preparation step, the infrared absorbing particles recovered after the dispersion medium reducing step, the coating resin raw material, an organic solvent, an emulsifier, water, and a polymerization initiator can be mixed to prepare a raw material mixture liquid.

There is a case where the infrared absorbing particles recovered after the dispersion medium reducing step have become dispersant-containing infrared absorbing particles with the dispersant, which is supplied in the dispersion liquid preparation step, adhering to the surfaces of the particles. Therefore, when the dispersant has adhered to the infrared absorbing particles, the dispersant-containing infrared absorbing particles recovered after the dispersion medium reducing step is used as the infrared absorbing particles in the raw material mixture liquid preparation step.

The materials, other than the infrared absorbing particles, that are used in the raw material mixture liquid preparation step will be described below.

### (a) Coating Resin Raw Material

The coating resin raw material is polymerized in the polymerization step described later to form a coating resin to be placed on at least parts of the surfaces of the infrared absorbing particles. Therefore, as the coating resin raw material, various monomers or the like that can be polymerized to form a desired coating resin can be selected.

The coating resin resulting from polymerization is not particularly limited, and can be one or more types of resins selected from, for example, thermoplastic resins, thermosetting resins, photocurable resins, and the like.

Examples of the thermoplastic resin include polyester resin, polycarbonate resin, acrylic resin, polystyrene resin, polyamide resin, vinyl chloride resin, olefin resin, fluororesin, polyvinyl acetate resin, thermoplastic polyurethane resin, acrylonitrile-butadiene-styrene resin, polyvinyl acetal resin, acrylonitrile-styrene copolymer resin, ethylene-vinyl acetate copolymer resin, and the like.

Examples of the thermosetting resin include phenolic resin, epoxy resin, melamine resin, urea resin, unsaturated polyester resin, alkyd resin, thermosetting polyurethane resin, polyimide resin, silicone resin, and the like.

Examples of the photocurable resin include resins that cure by irradiation with any light selected from ultraviolet light, visible light, and infrared light.

It is particularly preferable that the coating resin contains one or more types selected from polyester resin, polycarbonate resin, acrylic resin, polystyrene resin, polyamide resin, vinyl chloride resin, olefin resin, fluororesin, polyvinyl acetate resin, polyurethane resin, acrylonitrile-butadienestyrene resin, polyvinyl acetal resin, acrylonitrile-styrene copolymer resin, ethylene-vinyl acetate copolymer resin, phenol resin, epoxy resin, melamine resin, urea resin, unsaturated polyester resin, alkyd resin, polyimide resin, and silicone resin. Any of thermoplastic polyurethane resin and thermosetting polyurethane resin can be used as the polyurethane resin.

As the coating resin, a photocurable resin can also be suitably used, and the photocurable resin can contain a resin that cures by irradiation with any light selected from ultraviolet light, visible light, and infrared light as described above.

In particular, it is preferable that the coating resin is a resin to which a mini-emulsion polymerization method can be applied, and it is more preferable that the coating resin contains, for example, polystyrene resin. When the coating resin is a polystyrene resin, styrene can be used as the coating resin raw material.

A multifunctional vinyl monomer such as divinylbenzene, ethylene glycol dimethacrylate, and the like may be added as a crosslinking agent.

### (b) Organic Solvent

The organic solvent is not particularly limited, and any water-insoluble solvent may be used. Among such solvents, those that have a low molecular weight are preferable, and examples include one or more selected from long-chain alkyl compounds such as hexadecane and the like, methacrylic acid alkyl ester having a long alkyl moiety, such as dodecyl methacrylate, stearyl methacrylate, and the like, long-chain alcohols such as cetyl alcohol and the like, and oils such as olive oil and the like.

As the organic solvent, long-chain alkyl compounds are particularly preferable, and hexadecane is more preferable.

### (c) Emulsifier

The emulsifier, i.e., a surfactant, may be any selected from cationic types, anionic types, nonionic types, and the like, and is not particularly limited.

Examples of cationic emulsifiers include alkylamine salts, quaternary ammonium salts, and the like.

Examples of anionic emulsifiers include acid salts, ester salts, and the like.

Examples of nonionic emulsifiers include various esters, various ethers, various ester ethers, alkanolamides, and the like.

As the emulsifier, for example, one or more types selected from the above-mentioned materials can be used.

Among the emulsifiers, it is preferable to use a cationic emulsifier, that is, a surfactant that exhibits cationic properties, from the viewpoint of enabling the infrared absorbing particles to easily form organic-inorganic hybrid infrared absorbing particles in particular.

In particular, when an amine compound is used as the dispersant, it is preferable to use one or more cationic emulsifiers selected from dodecyl trimethylammonium chloride (DTAC), cetyl trimethylammonium chloride (CTAC), and the like.

When an amine compound is used as the dispersant, use of sodium dodecyl sulfate (SDS), which is an anionic emulsifier, may make it difficult to form organic-inorganic hybrid infrared absorbing particles. When preparing the raw material mixture liquid, the emulsifier can be added in the form of an aqueous solution, for example, by, for example, being added to water to be added at the same time. In this case, it is preferable to add the emulsifier in the form of an aqueous solution adjusted to a concentration that is equal to or greater than 10 times and equal to or less than 1,000 times, more preferably equal to or greater than 10 times and equal to or less than 500 times, yet more preferably equal to or greater than 10 times and equal to or less than 300 times, and particularly preferably equal to or greater than 10 times and equal to or less than 150 times the critical micelle concentration (CMC).

According to the study by the inventors of the present invention, by adding the emulsifier at a predetermined ratio with respect to the coating resin raw material, and sufficiently stirring them in accordance with the addition amount of the emulsifier, it is possible to adjust the content ratio of the infrared absorbing particles in the organic-inorganic hybrid infrared absorbing particles to be obtained to 15% by mass or greater. That is, by selecting the ratio at which the emulsifier is added with respect to the coating resin raw material and the stirring conditions, it is possible to realize coating or encapsulation with the resin even when the content ratio of the infrared absorbing particles is 15% by mass or greater. However, since these conditions vary depending on the type of the emulsifier and the like, the conditions are not particularly limited, and it is preferable to select appropriate conditions by performing preliminary tests.

### (d) Polymerization Initiator

As the polymerization initiator, one or more types selected from various polymerization initiators, such as radical polymerization initiators and ionic polymerization initiators, and the like can be used, and the polymerization initiator is not particularly limited.

Examples of radical polymerization initiators include azo compounds, dihalogens, organic peroxides, and the like. Redox initiators in which an oxidant and a reductant, such as hydrogen peroxide and iron (II) salt, persulfate and sodium bisulfite, or the like are combined can also be used.

Examples of ionic polymerization initiators include nucleophiles such as n-butyllithium and the like, and electrophiles such as protonic acid, Lewis acid, halogen molecules, carbocations, and the like.

When a cationic or nonionic polymerization initiator is used as a radical polymerization initiator, coating of the infrared absorbing particles can be efficient.

Therefore, when radical polymerization initiators are used as polymerization initiators, one or more types selected from cationic polymerization initiators, nonionic polymerization initiators, and the like can be suitably used.

Examples of nonionic initiators include oil-soluble nonionic initiators and water-soluble nonionic initiators.

Examples of oil-soluble nonionic polymerization initiators include 1,1'-azobis(cyclohexane-1-carbonitrile), 2,2'-azobis(2-methylbutyronitrile), 2,2'-azobis isobutyronitrile, 2,2'-azobis(2,4-dimethylvaleronitrile), 2,2'-azobis(4-methoxy-2,4-dimethylvaleronitrile), (dimethyl 1,1'-azobis(1-cyclohexane carboxylate), dimethyl 2,2'-azobis(2-methylpropionate), 2,2'-azobis(N-butyl-2-methylpropionamide), 2,2'-azobis[N-(2-propenyl)-2-methylpropionamide], and the like.

Examples of water-soluble nonionic initiators include 4,4'-azobis(4-cyanovaleric acid), 2,2'-azobis[2-methyl-N-(2-hydroxyethyl) propionamide], 2,2'-azobis[2-(2-imidazolin-2-yl)propane], and the like.

Examples of cationic polymerization initiators include: 2,2'-azobis-(2-(1,3-dimethyl-4,5-dihydro-1H-imidazol-3-ium-2-yl))propane triphthalate (ADIP), which always exhibits stable cationic properties irrespective of pH, and ADIP-Cl, which is the ADIP of which the counter anion is replaced with chloride ions; and 2,2'-azobis(2-methylpropionamidine)dihydrochloride, 2,2'-azobis[2-(2-imidazolin-2-yl)propane] dihydrochloride, 2,2'-azobis[2-(2-imidazolin-2-yl)propane] disulfate dihydrate, 2,2'-azobis[N-(2-carboxyethyl)-2-methylpropionamidine] tetrahydrate, and the like, which are protonated in the acidic to neutral range in a water environment and exhibit cationic properties.

Cationic polymerization initiators can be more suitably used as the radical polymerization initiators.

When a cationic polymerization initiator is used as the radical polymerization initiator, the surfaces of the infrared absorbing particles can be particularly uniformly coated with the resin in the organic-inorganic hybrid infrared absorbing particles to be obtained. The above effect is considered to be based on the affinity between the polymer matrix produced by the polymerization and the infrared absorbing particles. When a cationic polymerization initiator that exhibits cationic properties is used, an oligomer or a polymer having a cationic moiety at an end is adsorbed (grafted), through electrostatic interaction, to the surfaces of the infrared absorbing particles, which thus have an improved affinity with the polymer matrix, which is considered to result in a high affinity between the polymer matrix and the infrared absorbing particles. On the other hand, when a nonionic polymerization initiator that exhibits nonionic properties is used, the electrostatic interaction is less than that when a cationic polymerization initiator is used, and it is considered that the affinity between the polymer matrix and the infrared absorbing particles is relatively low. Therefore, when a cationic polymerization initiator is used, the infrared absorbing particles can be coated with the coating resin more uniformly than when a nonionic polymerization initiator is used.

According to the study of the inventors of the present invention, depending on selection of and combination between the emulsifier and the polymerization initiator, the uniformity of the resin coating the infrared absorbing particles when coating the infrared absorbing particles may be affected. Specifically, depending on selection of and combination between the emulsifier and the polymerization initiator, for example, there are cases where the infrared absorbing particles are coated uniformly, cases where the infrared absorbing particles are coated unevenly, and the like. Therefore, it is preferable to select the combination between the emulsifier and the polymerization initiator in accordance with the characteristics required of the organic-inorganic hybrid infrared absorbing particles.

When preparing the raw material mixture liquid, the polymerization initiator can be added to an organic phase or to an aqueous phase depending on the type of polymerization initiator. For example, when 2,2'-azobisisobutyronitrile is used, it can be added to an organic phase. When 2,2'-azobis(2-methylpropionamidine) dihydrochloride is used, it can be added to an aqueous phase.

In the raw material mixture liquid preparation step, it is only necessary to be able to prepare the raw material mixture liquid by mixing the infrared absorbing particles recovered after the dispersion medium reducing step, the coating resin raw material, the organic solvent, the emulsifier, water, and the polymerization initiator. Therefore, the preparation procedure of the raw material mixture liquid, and the like are not particularly limited. However, for example, a mixture liquid containing the emulsifier can be prepared in advance as the aqueous phase. In addition, a mixture liquid obtained by dispersing the coating resin raw material and the infrared absorbing particles recovered after the dispersion medium reducing step are in the organic solvent can be prepared as the organic phase.

As described above, the polymerization initiator can be added to the aqueous phase or to the organic phase in accordance with the type of the polymerization initiator to be used.

Then, the organic phase can be added to the aqueous phase and mixed to prepare the raw material mixture liquid.

In the raw material mixture liquid preparation step, it is preferable to mix the raw materials such that the content ratio of the infrared absorbing particles is 15% by mass or greater and 55% by mass or less in the organic-inorganic hybrid infrared absorbing particles to be obtained.

It is preferable to sufficiently perform agitation after adding the organic phase to the aqueous phase such that the coating resin can be more uniformly placed on the surfaces of the infrared absorbing particles. That is, it is preferable that the raw material mixture liquid preparation step further includes, in addition to a mixing step of mixing the infrared absorbing particles recovered after the dispersion medium reducing step, the coating resin raw material, the organic solvent, the emulsifier, water, and the polymerization initiator, an agitation step of agitating the obtained mixture liquid.

In the agitation step, agitation can be performed using, for example, a stirrer. In the case of performing the agitation step, the degree of agitation is not particularly limited, but it is preferable to perform agitation such that, for example, the infrared absorbing particles encapsulated within the coating resin raw material are dispersed in the aqueous phase to form oil-in-water droplets. Note that the agitation step does not need to be performed, and this process may be performed together with the stirring step described later.

The addition amount of the polymerization initiator is not particularly limited and can be selected desirably. The addition amount of the polymerization initiator can be selected in accordance with the types of the coating resin raw material and the polymerization initiator, the size of the oil droplets, which are mini-emulsion, the ratio between the coating resin raw material and the infrared absorbing particles, and the like. For example, an addition amount of the polymerization initiator of 0.01 mol% or greater and 1,000 mol% or less relative to the coating resin raw material is preferable because organic-inorganic hybrid infrared absorbing particles in which the infrared absorbing particles are sufficiently coated with the coating resin are likely to be obtained. The addition amount of the polymerization initiator is more preferably 0.1 mol% or greater and 200 mol% or less, and more preferably 0.2 mol% or greater and 100 mol% or less relative to the coating resin raw material.

### (4) Stirring Step

In the stirring step, the raw material mixture liquid obtained in the raw material mixture liquid preparation step can be stirred while being cooled.

The degree of stirring in the stirring step is not particularly limited and can be selected desirably. For example, it is preferable to perform stirring to result in a mini-emulsion, in which oil-in-water droplets, which are an O/W type emulsion in which the coating resin raw material encapsulating the infrared absorbing particles is dispersed in an aqueous phase, have a predetermined size.

The mini-emulsion is obtained by adding a substance that is rarely soluble in water, i.e., a hydrophobe, to the organic phase and applying a strong shear force. Examples of the hydrophobe include the organic solvents already mentioned in the above-described raw material mixture liquid preparation step.

In the stirring step, it is preferable to perform stirring such that the mini-emulsion to be obtained will have a particle size characteristic matching the intended organic-inorganic hybrid infrared absorbing particles.

Specifically, for example, in the stirring step, it is preferable to perform stirring such that the mini-emulsion will have one peak in a scattering intensity-based particle size distribution measured by the dynamic light scattering method. That is, in the stirring step, it is preferable that the particle size distribution of the mini-emulsion to be obtained does not have a plurality of, that is, two or more, peaks. When the particle size distribution of the mini-emulsion to be obtained in the stirring step is represented by one peak, the organic-inorganic hybrid infrared absorbing particles produced using the mini-emulsion have excellent dispersibility in various media, such as a dispersion medium and the like. Therefore, using the organic-inorganic hybrid infrared absorbing particles, it is possible to easily form an infrared absorbing particle dispersion liquid, an infrared absorbing particle dispersion body, a forgery-proof ink composition, and the like (hereinafter, may also be referred to as "an infrared absorbing particle dispersion liquid and the like"). In addition, an infrared absorbing particle dispersion liquid and the like that are obtained can have particularly enhanced infrared absorption characteristics.

It is preferable that the mini-emulsion obtained in the stirring step has a median diameter D50 of 1 µm or less and a standard deviation of 500 or less in the scattering intensity-based particle size distribution measured by the dynamic light scattering method.

By adjusting the D50 to 1 µm or less, it is possible to particularly enhance the dispersibility when preparing an infrared absorbing particle dispersion liquid and the like using the organic-inorganic hybrid infrared absorbing particles produced by using the mini-emulsion. In addition, by adjusting the standard deviation to 500 or less, it is possible to particularly restrict the spread of the particle size distribution of the organic-inorganic hybrid infrared absorbing particles produced by using the mini-emulsion. Therefore, when preparing an infrared absorbing particle dispersion liquid and the like using the organic-inorganic hybrid infrared absorbing particles, it is possible to facilitate uniform dispersion of the organic-inorganic hybrid infrared absorbing particles into the infrared absorbing particle dispersion liquid and the like, and to particularly enhance the infrared absorption characteristic.

The D50 is more preferably 800 nm or less, and yet more preferably 500 nm or less. The lower limit of the D50 is not particularly limited, yet, from the viewpoint of encapsulating a sufficient amount of infrared absorbing particles, it is preferably 30 nm or greater, more preferably 50 nm or greater, yet more preferably 100 nm or greater, and particularly preferably 150 nm or greater.

The standard deviation is more preferably 400 or less, yet more preferably 300 or less, and particularly preferably 250 or less. The lower limit of the standard deviation is not particularly limited, and is preferably 20 or greater, more preferably 50 or greater, and yet more preferably 100 or greater. By adjusting the standard deviation to 20 or greater, it is possible to enhance the productivity of the mini-emulsion.

In the stirring step, the specific conditions for producing the mini-emulsion having the above-described particle size characteristic are not particularly limited. For example, it is possible to select the conditions of the stirring tank, such as the volume and presence/absence of baffles, and the stirring conditions, such as the stirring power, the type of the stirring member used, and the like, such that an appropriate stirring force can be applied to the raw material mixture liquid in accordance with the type, the addition amount, and the like of the emulsifier and the like. The stirring step can be performed a plurality of times while changing the stirring conditions. For the stirring step, it is preferable to perform preliminary tests to select appropriate conditions.

In the stirring step, it is preferable to perform stirring while cooling the raw material mixture liquid as described above. This is because cooling the raw material mixture liquid makes it possible to form a mini-emulsion while inhibiting a polymerization reaction from progressing.

The degree to which the raw material mixture liquid is cooled is not particularly limited, yet it is preferable to cool the raw material mixture liquid by using a refrigerant of 0°C or lower by, for example, ice bathing.

### (5) Polymerization Step

In the polymerization step, after deoxidation treatment for reducing the amount of oxygen in the raw material mixture liquid is performed, the coating resin raw material can be caused to undergo a polymerization reaction.

In the polymerization step, the coating resin raw material can be polymerized, to place the coating resin on at least parts of the surfaces of the infrared absorbing particles. Here, it is preferable that the polymerization step results in organic-inorganic hybrid infrared absorbing particles in which the infrared absorbing particles are placed in resin capsules.

Although the conditions of the polymerization step are not particularly limited, deoxidation treatment for reducing the amount of oxygen in the raw material mixture liquid can be performed before starting polymerization. The specific method for deoxidation treatment are not particularly limited, and examples include ultrasonic irradiation, blowing of inert gas into the raw material mixture liquid, and the like.

The specific conditions for carrying out the polymerization reaction are not particularly limited, because the conditions can be desirably selected in accordance with the coating resin raw material and the like added to the raw material mixture liquid. For example, the polymerization reaction can be caused to proceed by heating the raw material mixture liquid, irradiating the raw material mixture liquid with light having a predetermined wavelength, and the like.

According to the method for producing organic-inorganic hybrid infrared absorbing particles of the present embodiment described above, it is possible to obtain organic-inorganic hybrid infrared absorbing particles by placing an organic material, such as a resin and the like, on at least parts of the surfaces of the infrared absorbing particles, which has been difficult so far. Therefore, even when exposed to an environment in which a chemical, such as an acid, an alkali, or the like is at a high temperature, the infrared absorbing particles can be inhibited from directly contacting the chemical component, such as the acid, the alkali, or the like. Therefore, the infrared absorbing particles have excellent chemical resistance characteristics, and can be inhibited from experiencing degradation of the infrared absorption characteristics.

Furthermore, according to the method for producing organic-inorganic hybrid infrared absorbing particles of the present embodiment, it is possible to produce organic-inorganic hybrid infrared absorbing particles containing infrared absorbing particles at a high content ratio of 15% by mass or greater, which has been particularly difficult so far. Therefore, it is possible to obtain organic-inorganic hybrid infrared absorbing particles having excellent infrared shielding characteristics in addition to chemical resistance characteristics.

### 2. Organic-inorganic hybrid infrared absorbing particles

Organic-inorganic hybrid infrared absorbing particles will be described. The organic-inorganic hybrid infrared absorbing particles may contain infrared absorbing particles and a coating resin coating at least parts of the surfaces of the infrared absorbing particles. It is more preferable that the coating resin forms resin capsules and the infrared absorbing particles are placed in the resin capsules. That is, it is more preferable that the entire surfaces of the infrared absorbing particles are covered with the coating resin. The organic-inorganic hybrid infrared absorbing particles may be produced by, for example, the above-described method for producing organic-inorganic hybrid infrared absorbing particles. Therefore, description of a part of the matters already described will be omitted.

By placing the coating resin for coating at least parts of the surfaces of the infrared absorbing particles on the surfaces of the infrared absorbing particles, which has been difficult so far, it is possible to inhibit the infrared absorbing particles from directly contacting a chemical component, such as an acid, an alkali, or the like, when they are exposed to an environment in which the chemical, such as the acid, the alkali, or the like is at a high temperature. Therefore, the organic-inorganic hybrid infrared absorbing particles of the present embodiment have excellent chemical resistance characteristic and can be inhibited from experiencing deterioration of the infrared absorption characteristics.

Conventionally, it has been difficult to place an organic material, such as a resin and the like, on the surfaces of the infrared absorbing particles, and in particular, no study has been conducted into increasing the content ratio of the infrared absorbing particles. On the other hand, the inventors of the present invention have conducted studies and found it possible to provide an infrared shielding material that satisfies both chemical resistance characteristics and infrared shielding characteristics by producing organic-inorganic hybrid infrared absorbing particles in which the content ratio of the infrared absorbing particles is equal to or greater than a predetermined ratio.

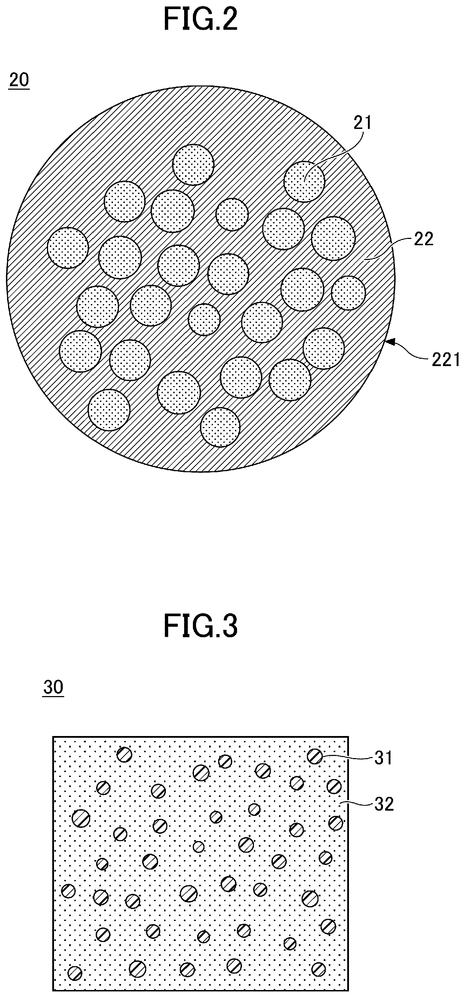

FIG. 2 shows a schematic cross-sectional view of an organic-inorganic hybrid infrared absorbing particle 20 of the present embodiment. As shown in FIG. 2, a coating resin 22 is placed on at least part of the surfaces of infrared absorbing particles 21 in the organic-inorganic hybrid infrared absorbing particle 20 of the present embodiment.

In particular, as shown in FIG. 2, it is preferable that the organic-inorganic hybrid infrared absorbing particle 20 of the present embodiment has a configuration in which the infrared absorbing particles 21 are placed in a resin capsule 221 formed of the coating resin 22. As shown in FIG. 2, a plurality of infrared absorbing particles 21 may be placed in one resin capsule 221, or only one may be placed there. The infrared absorbing particles 21 may exist unevenly in the resin capsule 221, but it is preferable that they are dispersed.

It is only needed that at least parts of the infrared absorbing particles 21 are coated with the resin capsule 221, so part of the infrared absorbing particles 21 may be exposed from the resin capsule 221 to the outer surface. However, it is preferable that the infrared absorbing particles 21 are completely coated with the resin capsule 221, that is, encapsulated within the resin capsule 221. This is because, when the infrared absorbing particles 21 are completely coated with the resin capsule 221, it is possible to reliably prevent the infrared absorbing particles 21 from contacting chemicals when the organic-inorganic hybrid infrared absorbing particle contact the chemical components, and to particularly enhance the chemical resistance characteristics.

Note that the organic-inorganic hybrid infrared absorbing particle 20 shown in FIG. 2 is schematically shown only for the sake of description, and the organic-inorganic hybrid infrared absorbing particles of this embodiment are not limited to this form. For example, the shape, size, positioning, and distribution of the infrared absorbing particles 21, and the shape, positioning, and the like of the coating resin 22 are not limited to this form.

### (1) Each Material of Organic-inorganic hybrid infrared absorbing particles

### (1-1) Infrared Absorbing Particles

Since the infrared absorbing particles have already been described in the description of the method for producing organic-inorganic hybrid infrared absorbing particles, description thereof is omitted. As the organic-inorganic hybrid infrared absorbing particles, it is preferable to use infrared absorbing particles containing various materials containing free electrons, and it is more preferable to use infrared absorbing particles containing various inorganic materials containing free electrons.

As the infrared absorbing particles, it is particularly preferable to use infrared absorbing particles containing one or more types selected from oxygen deficiency-containing tungsten oxides and complex tungsten oxides. In this case, specifically, for example, it is preferable that the infrared absorbing particles contain one or more types selected from tungsten oxides represented by a general formula W_{y}O_{z} (W: tungsten, O: oxygen, 2.2<z/y<2.999), and complex tungsten oxides represented by a general formula MₓW_{y}O_{z} (where the element M is one or more types selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir,

Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I, 0.001≤x/y≤1, 2.0≤z/y<4.0).

In the organic-inorganic hybrid infrared absorbing particles, the content ratio of the infrared absorbing particles can be 15% by mass or greater and 55% by mass or less. When the content ratio of the infrared absorbing particles is 15% by mass or greater, a forgery-proof ink composition containing the organic-inorganic hybrid infrared absorbing particles can exhibit excellent infrared absorbing characteristics. Moreover, when the content ratio of the infrared absorbing particles is 55% by mass or less, at least parts of the surfaces of the infrared absorbing particles can be reliably coated with the coating resin, and the chemical resistance characteristic of a forgery-proof ink composition containing the organic-inorganic hybrid infrared absorbing particles can be enhanced.

### (1-2) Coating Resin

Description of the coating resin, which has already been described in the description of the method for producing organic-inorganic hybrid infrared absorbing particles as well, is omitted here. Yet, it can be noted that the coating resin may be one or more types of resins selected from, for example, thermoplastic resins, thermosetting resins, and photo-curable resins. It is particularly preferable that the coating resin contains one or more types selected from polyester resin, polycarbonate resin, acrylic resin, polystyrene resin, polyamide resin, vinyl chloride resin, olefin resin, fluororesin, polyvinyl acetate resin, polyurethane resin, acrylonitrile-butadienestyrene resin, polyvinyl acetal resin, acrylonitrile-styrene copolymer resin, ethylene-vinyl acetate copolymer resin, phenol resin, epoxy resin, melamine resin, urea resin, unsaturated polyester resin, alkyd resin, polyimide resin, and silicone resin. Any of thermoplastic polyurethane resin and thermosetting polyurethane resin can be used as the polyurethane resin.

As the coating resin, a photo-curable resin can also be suitably used. As the photo-curable resin, a resin that cures by irradiation with any of ultraviolet light, visible light, and infrared light can be suitably used.

Among them, the coating resin is preferably a resin to which the mini-emulsion polymerization method can be applied, and more preferably, for example, polystyrene resin.

In the organic-inorganic hybrid infrared absorbing particles described above, the coating resin, which is an organic material, is placed on at least part of the surfaces of the infrared absorbing particle, which has been difficult so far. Therefore, the infrared absorbing particles can be inhibited from directly contacting a chemical component, such as an acid, an alkali, or the like, when exposed to an environment in which the chemical, such as the acid, the alkali, or the like is at a high temperature. Therefore, the infrared absorbing particles have excellent chemical resistance characteristic and can be inhibited from deterioration of the infrared absorption characteristic. A forgery-proof ink composition using the organic-inorganic hybrid infrared absorbing particles can likewise have chemical resistance characteristics.

The forgery-proof ink composition of this embodiment may further contain any optional component other than the organic-inorganic hybrid infrared absorbing particles. The forgery-proof ink composition may also contain, for example, a liquid medium, a dispersant, a surfactant, and the like described below.

### 3. Liquid Medium

The forgery-proof ink composition of this embodiment may further contain a liquid medium.

When the forgery-proof ink composition of this embodiment contains the liquid medium, printing and the like of the forgery-proof ink composition of this embodiment on a printing base material and the like is facilitated. The liquid medium contains therein the organic-inorganic hybrid infrared absorbing particles, which, preferably, are dispersed.
Therefore, the liquid medium may be referred to as a dispersion medium or a solvent.

Therefore, for example, as schematically shown in FIG. 3, a forgery-proof ink composition 30 of this embodiment may contain organic-inorganic hybrid infrared absorbing particles 31 described above, and a liquid medium 32.

FIG. 3 is a schematic view, and the forgery-proof ink composition of this embodiment is not limited to this form. For example, in FIG. 3, the organic-inorganic hybrid infrared absorbing particles 31 are shown as circles and described as spherical particles. However, the shape of the organic-inorganic hybrid infrared absorbing particles 31 is not limited to this form and may be any shape. In FIG. 3, description of the infrared absorbing particles in the organic-inorganic hybrid infrared absorbing particles is omitted. In addition to the organic-inorganic hybrid infrared absorbing particles 31 and the liquid medium 32, the forgery-proof ink composition 30 may contain other additives such as a dispersant and the like as needed.

The liquid medium is not particularly limited as long as it is a material that can provide the forgery-proof ink composition of this embodiment with fluidity suitable for the printing method when using the forgery-proof ink composition by printing and the like.

The liquid medium is not particularly limited. For example, it is possible to use a liquid medium containing one or more types selected from water, alcohols, such as ethanol and the like, ketones, such as methyl ethyl ketone and the like, ester solvents, such as 3-methyl-methoxy-propionate and the like, glycol derivatives, such as propylene glycol monomethyl ether acetate and the like, aromatic hydrocarbons, such as toluene, xylene, and the like, amides, such as formamide and the like, chlorinated compounds, such as chlorobenzene and the like, vegetable oils and compounds derived from vegetable oils, and petroleum-based solvents.

Examples of vegetable oils include drying oils such as linseed oil, sunflower oil, tung oil, and the like; semi-drying oils such as sesame oil, cottonseed oil, rapeseed oil, soybean oil, rice bran oil, and the like; and non-drying oils such as olive oil, palm oil, dehydrated castor oil, and the like.

Examples of compounds derived from vegetable oils include fatty acid monoesters which are produced by a direct ester reaction between fatty acids and monoalcohols of vegetable oils, ethers, and the like.

Examples of petroleum-based solvents include Isopar E, Exol Hexane, Exol Heptane, Exol E, Exol D30, Exol D40, Exol D60, Exol D80, Exol D95, Exol D110, and Exol D130 having high aniline points (all available from Exxon Mobil Corporation) and the like. Examples of petroleum-based solvents also include mineral oils and the like.

In a case of adding the liquid medium, the liquid medium can be selected in accordance with the characteristics required of, and the purposes of use of, the forgery-proof ink composition, or a forgery-proof ink containing the forgery-proof ink composition, and is not particularly limited.

When the forgery-proof ink composition of this embodiment contains the liquid medium, the specific method for dispersing the organic-inorganic hybrid infrared absorbing particles in the liquid medium is not particularly limited. In order to prepare the forgery-proof ink described later, for example, ultrasonic waves or a medium stirring mill can be used in the same manner as when the forgery-proof ink composition is dispersed in a liquid uncured material of resin cured by energy rays. More specifically, an apparatus such as a bead mill, a ball mill, a Sandoz mill, a paint shaker, or an ultrasonic homogenizer can be used. When dispersing the organic-inorganic hybrid infrared absorbing particles in the liquid medium, it is preferable to select the dispersion condition so as not to peel off the coating resin, which is an organic material disposed on the surface of the infrared absorbing particles.

### 4. Dispersants and Surfactants

Next, dispersants and surfactants will be described.

The forgery-proof ink composition of this embodiment may contain one or more types selected from a dispersant and a surfactant. The dispersant and the surfactant are not particularly limited as long as they can disperse the above-described organic-inorganic hybrid infrared absorbing particles in the forgery-proof ink composition. When the forgery-proof ink composition of this embodiment contains the dispersant, as the dispersant, for example, a copolymer containing an amine-based functional group and a polyether structure can be contained. Examples of the copolymer containing an amine-based functional group and a polyether structure include Solsperse (registered trademark) 20000 available from Lubrizol Japan Ltd.; Disperbyk (registered trademark)-161, 162, 163, 182, 184, and 185 available from Byk-Chemie Japan; Disparon (registered trademark) DA-234 and DA-325 available from Kusumoto Chemicals, Ltd.; and the like. When the forgery-proof ink composition of this embodiment contains the surfactant, as the surfactant, for example, dodecyl trimethylammonium chloride can be used.

### 5. Other Additive Components

The forgery-proof ink composition of this embodiment may further contain optional additive components as needed.

The forgery-proof ink composition of this embodiment may contain, for example, one or more types selected from coloring pigments, dyes, and the like.

### [Forgery-Proof Ink]

A forgery-proof ink of this embodiment can contain the above-described forgery-proof ink composition and a liquid-state uncured matter of a resin that cures by energy rays.

The liquid-state uncured matter of a resin that cures by energy rays is not particularly limited, and, for example, an uncured matter of a resin that cures by irradiation with any of ultraviolet light, visible light, and infrared light can be used.

The liquid-sate uncured matter of a resin that cures by energy rays needs only to have a liquid state when it is applied to a print-target base material, i.e., a fluidity sufficient to enable itself to be applied to the print-target base material.

The method for dispersing the forgery-proof ink composition in the liquid-state uncured matter of a resin that cures by energy rays, to obtain the forgery-proof ink, is not particularly limited.

Examples of the means (method) for dispersing the forgery-proof ink composition in the liquid-state uncured product of a resin that cures by energy rays include a means using ultrasonic waves, a medium stirring mill, and the like. Examples of the medium stirring mill include bead mills, ball mills, sand mills, paint shakers, and the like using media (beads, balls, and Ottawa sand). Use of ultrasonic waves, a media stirring mill, and the like for dispersing the forgery-proof ink composition is preferable because it is possible to disperse the organic-inorganic hybrid infrared absorbing particles and the like particularly uniformly in the liquid-state uncured matter of a resin that cures by energy rays.

Therefore, examples of the dispersion treatment method for dispersing the organic-inorganic hybrid infrared absorbing particles and the like in the liquid-state uncured matter of a resin that cures by energy rays include dispersion treatment methods using a bead mill, a ball mill, a sand mill, a paint shaker, an ultrasonic homogenizer, and the like.

However, when a media stirring mill is used, there is a case where the organic-inorganic hybrid infrared absorbing particles break into more minute particles due to collision between themselves or with the media, at the same time as the organic-inorganic hybrid infrared absorbing particles are dispersed in the liquid-state uncured matter of a resin that cures by energy rays. Therefore, it is preferable to select the stirring conditions such that the coating resin, which is an organic material placed on the surfaces of the infrared absorbing particles, is not peeled due to excessive breaking into minute particles. When performing the dispersion treatment by using a media stirring mill, for example, it is preferable to use media having a small diameter or to shorten the time for the pulverization and dispersion treatment extremely.

Furthermore, the forgery-proof ink of this embodiment may further contain optional components as required. The forgery-proof ink of this embodiment may further contain, for example, an organic binder. With an organic binder contained in the forgery-proof ink, when the forgery-proof ink of this embodiment is applied, printed, or the like, to form a print part on a print-target base material, peeling of the print part, and detachment of the organic-inorganic hybrid infrared absorbing particles, and the like can be particularly inhibited. As the organic binder, one or more types selected from, for example, polyvinyl butyral, polyvinyl formal, and the like may be suitably used.

In the organic-inorganic hybrid infrared absorbing particles contained in the forgery-proof ink of this embodiment, the infrared absorbing particles can be inhibited from directly contacting a chemical component, such as an acid, an alkali, or the like when exposed to an environment in which the chemical, such as the acid, the alkali, or the like is at a high temperature as described above. Therefore, the organic-inorganic hybrid infrared absorbing particles have excellent chemical resistance characteristics and can be inhibited from experiencing deterioration of the infrared absorption characteristics. The forgery-proof ink of this embodiment containing the organic-inorganic hybrid infrared absorbing particles can also have chemical resistance characteristics.

### [Forgery-Proof Printed Matter]

### (1) Configuration of Forgery-Proof Printed Matter

A forgery-proof printed matter of this embodiment can include a print part containing the above-described forgery-proof ink composition.

The print part of the forgery-proof printed matter of this embodiment can be obtained by, for example, coating or printing the above-described forgery-proof ink composition or forgery-proof ink on the surface of a print-target base material by a routine method. Since the forgery-proof ink composition or the forgery-proof ink can be printed in, for example, a film form on a print-target base material, the print part can be referred to as a print film.

The method for forming the forgery-proof printed matter of this embodiment, i.e., the method for applying or printing the above-described forgery-proof ink composition or forgery-proof ink on the surface of a print-target base material, is not particularly limited. As the method for printing the above-described forgery-proof ink composition or forgery-proof ink, one or more types selected from, for example, offset printing, relief printing, flexographic printing, letterpress printing (resin relief printing), intaglio printing, screen printing, inkjet printing, and the like can be mentioned.

The print part of the forgery-proof printed matter can be formed by, for example, removing the liquid medium by evaporation or the like from the above-described forgery-proof ink composition or forgery-proof ink that has been applied, or the like, to fix solid components, such as the organic-inorganic hybrid infrared absorbing particles and the like, on the surface of the print-target base material. At least a part of the liquid medium may remain in the print part.

The print part can also be formed by curing the liquid-state uncured matter of a resin that cures by energy rays, contained in the forgery-proof ink, by irradiation with energy rays, to fix the organic-inorganic hybrid infrared absorbing particles and the like on the print-target base material.

As described above, the forgery-proof ink can also contain an organic binder. In this case, the print part of the forgery-proof printed matter of this embodiment can also contain the organic binder. When the forgery-proof ink contains an organic binder, after applying or printing the forgery-proof ink, it is preferable to cure the organic binder under conditions selected in accordance with the type of the organic binder.

The print part can be obtained by applying or printing the forgery-proof ink composition or the forgery-proof ink on a print-target base material as described above, and then performing a treatment corresponding to the components contained as described above. If necessary, a cover layer or the like made of a transparent resin can be provided on the print part in order to prevent peeling of the print part and detachment of the particles contained in the print part.

Although it is possible to change the content of the infrared absorbing particles in the print part of the forgery-proof printed matter in accordance with the intended application, generally, the content is preferably 0.05 g/m² or greater. When the content is 0.05 g/m² or greater, absorption of the near-infrared range is noticeably exhibited, and a particularly high performance as forgery-proof printed matter is exhibited. The upper limit of the content is not particularly limited, yet is preferably 4 g/m² or less, from the viewpoint of maintaining transparency, because light in the visible light range is not considerably absorbed at that content. The content of the above-described infrared absorbing particles can be evaluated based on the content per 1 m² of the print part, since the entirety of the filler acts equally on the light to be incident into the print surface.

As the print-target base material on which the forgery-proof ink composition or the forgery-proof ink is applied or printed, anything that is suited to the intended application may be used. In addition to paper, a mixture of a resin and pulp, a resin film, and the like can be used. Moreover, the above-described forgery-proof ink composition or forgery-proof ink may be printed on a seal, and the seal may be pasted on a print-target base material.

The forgery-proof printed matter of this embodiment may also include parts on which various inks that may be used on ordinary printed matters are printed, in addition to the print part containing the above-described forgery-proof ink composition.

The forgery-proof printed matter of this embodiment produced in this way cannot be reproduced by copying or the like, and the authenticity thereof can be determined not by visual determination but reliably by an automatic manner by irradiating it with infrared light and detecting reflection therefrom or transmission therethrough. Furthermore, since the organic-inorganic hybrid infrared absorbing particles are used as the infrared absorbing material and applied to the print-target base material by a printing method, it is possible to provide inexpensive forgery-proof printed matter having excellent infrared absorption characteristics and excellent chemical resistance characteristics.

### (2) Near-Infrared Absorbing Effect of Forgery-Proof Printed Matter

The forgery-proof printed matter using the above-described forgery-proof ink composition or forgery-proof ink exhibits excellency in the near-infrared absorbing effect, with a reflectance lower than 50% at a wavelength of 1,000 nm when the base material of the forgery-proof printed matter is high-quality paper.

### (3) Chemical Resistance Characteristic of Forgery-Proof Printed Matter

The forgery-proof printed matter of this embodiment using the above-described forgery-proof ink composition or forgery-proof ink has excellent chemical resistance characteristics. Therefore, even when the forgery-proof printed matter of this embodiment is immersed for 30 minutes in, for example, a 0.01 mol/L sodium hydroxide aqueous solution maintained at 80°C, the difference in reflectance before and after the chemical resistance test at the wavelength of 1,000 nm is maintained at 1.3% or less. In other words, the forgery-proof printed matter of this embodiment can have chemical resistance characteristics.

### Examples

The present invention will be specifically described below with reference to Examples. However, the present invention is not limited to the following Examples.

The optical characteristics of the print part of forgery-proof printed matters obtained in Examples and Comparative Examples were measured using a spectrophotometer U-4100 (obtained from Hitachi, Ltd.).

To measure the crystallite diameter of the infrared absorbing particles, a dry powder of the infrared absorbing particles obtained by removing the solvent from a dispersion liquid of the infrared absorbing particles was used. Then, an X-ray diffraction pattern of the infrared absorbing particles was measured by the powder X-ray diffraction method (θ-2θ method) using a powder X-ray diffractometer (D2 PHASER obtained from Bruker AXS GmbH). The crystal structure contained in the infrared absorbing particles was identified from the obtained X-ray diffraction pattern, and the crystallite diameter was calculated using the Rietveld method.

### [Example 1]

A forgery-proof ink composition and forgery-proof printed matter were produced by the following procedure, and evaluated.

### 1. Production of Organic-inorganic hybrid infrared absorbing particles

Organic-inorganic hybrid infrared absorbing particles for use in a forgery-proof ink composition were produced by following the steps below.

### (Dispersion Liquid Preparation Step)

In the dispersion liquid preparation step, a dispersion liquid containing infrared absorbing particles, a dispersant and a dispersion medium was prepared.

As the infrared absorbing particles, a complex tungsten oxide powder containing a hexagonal crystal cesium tungsten bronze (Cs_{0.33}WO_{z}, 2.0<z<4.0), in which the ratio between cesium (Cs) and tungsten (W) by number of moles was Cs/W=0.33, was prepared.

As the dispersant, a polymeric dispersant, which was a copolymer of styrene and 2-(dimethylamino) ethyl methacrylate, was prepared.

As the dispersion medium, toluene was prepared.

The mixture liquid obtained by mixing 20% by mass of the infrared absorbing particles, 6% by mass of the dispersant, and 74% by mass of the dispersion medium was loaded into a paint shaker filled with 0.3 mmφ ZrO₂ beads, and pulverized and dispersed for 24 hours. By the pulverization/dispersion treatment, a Cs_{0.33}WO_{z} particle dispersion liquid of Example 1 was obtained.

### (Dispersion Medium Reducing Step)

Toluene, which was the dispersion medium, was removed from the Cs_{0.33}WO_{z} particle dispersion liquid obtained in the dispersion liquid preparation step using an evaporator, to recover the infrared absorbing particles. The recovered infrared absorbing particles had become a dry powder of Cs_{0.33}WO_{z} particles containing the polymeric dispersant. In other words, the recovered infrared absorbing particles were dispersant-surface-modified infrared absorbing particles to whose surfaces the dispersant supplied in the dispersion liquid preparation step adhered, and were dispersant-containing infrared absorbing particles.

The crystallite diameter of the recovered infrared absorbing particles, namely Cs_{0.33}WO_{z} particles, was measured to be 16 nm.

The crystallite diameter was measured and calculated by the method described above.

### (Raw Material Mixture Liquid Preparation Step)

An organic phase was prepared by mixing 12.9 g of the dispersant-surface-modified infrared absorbing particles obtained in the dispersion medium reducing step with 30 g of styrene, which was a coating resin raw material. In this Example, the infrared absorbing particles and other components were added and mixed such that the content ratio (target ratio) of the infrared absorbing particles in the organic-inorganic hybrid infrared absorbing particles to be obtained ultimately would be 20% by mass.

In order to disperse the dispersant-surface-modified infrared absorbing particles into styrene, the above organic phase was mixed and subjected to dispersion treatment.

Next, 2.09 g of hexadecane, which was an organic solvent, was added to the organic phase and dispersion treatment was further performed.

In addition, apart from the above organic phase, 3 g of cetyl trimethylammonium chloride, which was an emulsifier, 300 g of water, and 1.56 g of 2,2'-azobis(2-methylpropionamidine) dihydrochloride which was a polymerization initiator, were mixed to form an aqueous phase. When forming the aqueous phase, cetyl trimethylammonium chloride, which was the emulsifier, was added to the water such that the concentration would be 24 times the critical micelle concentration. The polymerization initiator was added such that the concentration would be 2.0 mol% with respect to styrene.

Then, the organic phase was added to the aqueous phase to prepare a raw material mixture liquid. The addition amount of each component added in the raw material mixture liquid preparation step is collectively shown in Table 1.

### (Stirring Step)

The raw material mixture liquid prepared in the raw material mixture liquid preparation step was stirred in an ice bath until there would appear one peak in a scattering intensity-based particle size distribution of a mini-emulsion to be obtained, to be measured by the dynamic light scattering method. Here, in the particle size distribution, the D50 was 188 nm and the standard deviation was 119.

### (Polymerization Step)

After the stirring step, the raw material mixture liquid was subjected to deoxidation by 15 minutes of nitrogen bubbling in an ice bath.

Subsequently, styrene was caused to undergo polymerization reaction by 6 hours of heating at 70°C in a nitrogen atmosphere, to obtain an organic-inorganic hybrid infrared absorbing particle dispersion liquid.

The obtained dispersion liquid containing the organic-inorganic hybrid infrared absorbing particles was diluted, transferred to a microgrid for TEM observation, and TEM observation of the transferred object was performed. As a result, it was confirmed that the infrared absorbing particles composed of the complex tungsten oxide were encapsulated within polystyrene particles, and that organic-inorganic hybrid infrared absorbing particles were formed.

### (Evaluation of Particle Size Characteristics)

Using a particle size measuring instrument (ELSZ-2000 obtained from Otsuka Electronics Co., Ltd.) based on the dynamic light scattering method, a scattering intensity-based particle size distribution of the organic-inorganic hybrid infrared absorbing particles was measured. It was successfully confirmed that the particle size distribution of the obtained organic-inorganic hybrid infrared absorbing particles includes one peak. Then, the median diameter D50 and the standard deviation were calculated from the obtained particle size distribution. The evaluation results are shown in Table 2.

### (Content Ratio of Infrared Absorbing Particles)

A Thermo-Gravimetric Analysis (TGA) was performed, to remove the resin component by raising the temperature until the weight reduction stopped, and the mass of the infrared absorbing particles in the obtained organic-inorganic hybrid infrared absorbing particles was measured. The content ratio of the measured infrared absorbing particles in the evaluated organic-inorganic hybrid infrared absorbing particles was calculated, and it was confirmed that the content ratio was 20% by mass, which was the preparation ratio and the target ratio. In the following other Examples and Comparative Examples, the content ratio of the infrared absorbing particles in the organic-inorganic hybrid infrared absorbing particles was measured in the same manner, and it was confirmed that the target composition was achieved.

### 2. Forgery-Proof Ink Composition

The solvent was removed from the dispersion liquid containing the obtained organic-inorganic hybrid infrared absorbing particles by vacuum fluidized bed drying, and a dry powder of the organic-inorganic hybrid infrared absorbing particles of Example 1 was obtained. The obtained dry powder and a sheet-fed offset ink (BEST ONE MEDIUM obtained from T & K TOKA Co., Ltd.) were mixed at a ratio of 1:30 by weight, and dispersed using a planetary mixer, to obtain a forgery-proof ink composition of Example 1.

The sheet-fed offset ink used contains a mineral oil and a vegetable oil, which are equivalent to a liquid medium.

### 3. Forgery-Proof Printed Matter

High-quality paper was used as a print-target base material, and the forgery-proof ink composition was printed on the surface of the paper, to obtain a forgery-proof printed matter including a print film (print part).

### (Evaluation of Forgery-Proof Printed Matter)

The optical characteristics of the forgery-proof printed matter were measured by a reflection method using a spectrophotometer (U-4100 available from Hitachi, Ltd.). A white plate (aluminum oxide), which was an accessory of the instrument, was used as the baseline of the reflectance.

The optical characteristic of the forgery-proof printed matter was measured. As a result, the reflectance of light having a wavelength of 1,000 nm in the near-infrared range was 47%. The evaluation result is shown in the "Reflectance at wavelength of 1,000 nm before chemical resistance test" field of Table 2.

A higher reflectance at a predetermined wavelength means less absorption at the wavelength, and a lower reflectance at a predetermined wavelength means a greater absorption at the wavelength. Therefore, it can be confirmed that the forgery-proof printed matter of Example 1 had a better absorption characteristic with respect to light having a wavelength of 1,000 nm than that of Reference Example 1, etc., which will be described later. Although Example 1 and Reference Example 1 had the same reflectance at a wavelength of 1,000 nm before the chemical resistance test, the addition amount of a dry powder of organic-inorganic hybrid infrared absorbing particles in preparation of a forgery-proof ink composition was twice that in Example 1. Therefore, when compared under the same conditions, it can be regarded that Example 1 had a better absorption characteristic with respect to light having a wavelength of 1,000 nm than that of Reference Example 1.

### (Chemical Resistance Test)

An alkali resistance test was performed by immersing the obtained forgery-proof printed matter in a 0.01 mol/L sodium hydroxide aqueous solution maintained at 80°C and stirring them for 30 minutes. The optical characteristic of the forgery-proof printed matter after the alkali resistance test was measured. As a result, the difference of the reflectance of light having a wavelength of 1,000 nm from that before the alkali resistance test was 0.5%, which means substantially no change, and it was confirmed that the forgery-proof printed matter had maintained the infrared absorption characteristic and had a chemical resistance characteristic. The difference between the results of the evaluation performed before and after the chemical resistance test is shown in the "Reflectance difference at wavelength of 1,000 nm between before and after chemical resistance test" field of Table 2.

The results of the evaluation are shown in Table 2.

### [Example 2]

In the raw material mixture liquid preparation step, an organic phase was formed in the same manner as in Example 1 except that 23.4 g of dispersant-surface-modified infrared absorbing particles obtained in the dispersion medium reducing step and 30 g of styrene as a coating resin raw material were mixed. In this Example, the infrared absorbing particles and other components were added and mixed such that the content ratio (target ratio) of the infrared absorbing particles in the organic-inorganic hybrid infrared absorbing particles to be obtained ultimately would be 30% by mass.

Organic-inorganic hybrid infrared absorbing particles, a forgery-proof ink composition, and forgery-proof printed matter of Example 2 were produced in the same manner as in Example 1 except for the above point, and evaluated.

In the stirring step, as in Example 1, the raw material mixture liquid prepared in the raw material mixture liquid preparation step was stirred in an ice bath until there would appear one peak in a scattering intensity-based particle size distribution of a mini-emulsion to be obtained, to be measured by the dynamic light scattering method. Here, in the particle size distribution of the mini-emulsion, the D50 was 226 nm, and the standard deviation was 141.

The evaluation results are shown in Table 2.

### [Example 3]

In the raw material mixture liquid preparation step, an organic phase was formed in the same manner as in Example 1 except that 39.7 g of dispersant-surface-modified infrared absorbing particles obtained in the dispersion medium reducing step and 30 g of styrene as a coating resin raw material were mixed. In this Example, the infrared absorbing particles and other components were added and mixed such that the content ratio (target ratio) of the infrared absorbing particles in the organic-inorganic hybrid infrared absorbing particles to be obtained ultimately would be 40% by mass.

Organic-inorganic hybrid infrared absorbing particles, a forgery-proof ink composition, and forgery-proof printed matter of Example 3 were produced in the same manner as in Example 1 except for the above point, and evaluated.

In the stirring step, the raw material mixture liquid prepared in the raw material mixture liquid preparation step was stirred in an ice bath until there would appear one peak in a scattering intensity-based particle size distribution of a mini-emulsion to be obtained, to be measured by the dynamic light scattering method. Here, in the particle size distribution of the mini-emulsion, the D50 was 222 nm, and standard deviation was 134.

The evaluation results are shown in Table 2.

### [Example 4]

In the raw material mixture liquid preparation step, an organic phase was formed in the same manner as in Example 1 except that 70.8 g of dispersant-surface-modified infrared absorbing particles obtained in the dispersion medium reducing step and 30 g of styrene as a coating resin raw material were mixed. In addition, an aqueous phase was formed by mixing 4.49 g of cetyl trimethylammonium chloride as an emulsifier, 300 g of water, and 1.56 g of 2,2'-azobis(2-methylpropionamidine) dihydrochloride as a polymerization initiator. When forming the aqueous phase, cetyl trimethylammonium chloride as an emulsifier was added to the water such that the concentration would be 36 times the critical micelle concentration.

In this Example, the infrared absorbing particles and other components were added and mixed such that the content ratio (target ratio) of the infrared absorbing particles in the organic-inorganic hybrid infrared absorbing particles to be obtained ultimately would be 50% by mass.

Organic-inorganic hybrid infrared absorbing particles, a forgery-proof ink composition, and forgery-proof printed matter of Example 4 were produced in the same manner as in Example 1 except for the above points, and evaluated.

In the stirring step, the raw material mixture liquid prepared in the raw material mixture liquid preparation step was stirred in an ice bath until there would appear one peak in a scattering intensity-based particle size distribution of a mini-emulsion to be obtained, to be measured by the dynamic light scattering method. In the particle size distribution of the mini-emulsion, the D50 was 217 nm, and the standard deviation was 144.

The evaluation results are shown in Table 2.

### [Examples 5 to 12]

When forming an organic phase and an aqueous phase in the raw material mixture liquid preparation step, the addition ratio of each component was set to the values shown in Table 1.

In Examples 5 to 12, infrared absorbing particles and other components were added and mixed such that the content ratio (target ratio) of the infrared absorbing particles in the organic-inorganic hybrid infrared absorbing particles to be obtained ultimately would be 30% by mass.

Organic-inorganic hybrid infrared absorbing particles, a forgery-proof ink composition, and forgery-proof printed matter of Examples 5 to 12 were produced in the same manner as in Example 1 except for the above point, and evaluated.

In the stirring step, the raw material mixture liquid prepared in the raw material mixture liquid preparation step was stirred in an ice bath until there would appear one peak in a scattering intensity-based particle size distribution of a mini-emulsion to be obtained, to be measured by the dynamic light scattering method. Here, in the particle size distribution of the mini-emulsion, the D50 and the standard deviation were as shown in the evaluation results of the organic-inorganic hybrid infrared absorbing particles shown in Table 2 in each Example. That is, for example, in Example 5, the D50 was 203 nm, and the standard deviation was 147.

The evaluation results are shown in Table 2.

### [Example 13]

When forming an organic phase and an aqueous phase in the raw material mixture liquid preparation step, the addition ratio of each component was set to the values shown in Table 1.

In this Example, infrared absorbing particles and other components were added and mixed such that the content ratio (target ratio) of the infrared absorbing particles in the organic-inorganic hybrid infrared absorbing particles to be obtained ultimately would be 40% by mass.

Organic-inorganic hybrid infrared absorbing particles, a forgery-proof ink composition, and forgery-proof printed matter were produced in the same manner as in Example 1 except for the above point, and evaluated.

In the stirring step, the raw material mixture liquid prepared in the raw material mixture liquid preparation step was stirred in an ice bath until there would appear one peak in a scattering intensity-based particle size distribution of a mini-emulsion to be obtained, to be measured by the dynamic light scattering method. Here, in the particle size distribution of the mini-emulsion, the D50 was 235 nm and the standard deviation was 155.

The evaluation results are shown in Table 2.

### [Reference Example 1]

In the raw material mixture liquid preparation step, an organic phase was formed in the same manner as in Example 1 except that 5.5 g of dispersant-surface-modified infrared absorbing particles obtained in the dispersion medium reducing step an 30 g of styrene as a coating resin raw material were mixed. In Reference Example 1, the infrared absorbing particles and other components were added and mixed such that the content ratio (target ratio) of the infrared absorbing particles in the organic-inorganic hybrid infrared absorbing particles to be obtained ultimately would be 10% by mass.

Organic-inorganic hybrid infrared absorbing particles of Reference Example 1 were obtained in the same manner as in Example 1 except for the above point. The solvent was removed from the dispersion liquid containing the obtained organic-inorganic hybrid infrared absorbing particles by vacuum fluidization, to obtain a dry powder of the organic-inorganic hybrid infrared absorbing particles of Reference Example 1. The obtained dry powder of the organic-inorganic hybrid infrared absorbing particles and a sheet-fed offset ink (BEST ONE MEDIUM obtained from T & K TOKA Co., Ltd.) were mixed at a ratio of 2:30 by weight, and dispersed using a planetary mixer, to obtain a forgery-proof ink composition of Reference Example 1.

High-quality paper was used as a print-target base material, and the forgery-proof ink composition was printed on the surface thereof, to obtain forgery-proof printed matter including a print film (print part).

In the stirring step, as in Example 1, the raw material mixture liquid prepared in the raw material mixture liquid preparation step was stirred in an ice bath until there would appear one peak in a scattering intensity-based particle size distribution of a mini-emulsion to be obtained, to be measured by the dynamic light scattering method. Here, in the particle size distribution of the mini-emulsion, the D50 was 124 nm, and the standard deviation was 96.

The evaluation results are shown in Table 2.

### [Comparative Example 1]

In the raw material mixture liquid preparation step, an organic phase was formed in the same manner as in Example 1 except that 135.2 g of dispersant-surface-modified infrared absorbing particles obtained in the dispersion medium reducing step and 30 g of styrene as a coating resin raw material were mixed. In Comparative Example 1, the infrared absorbing particles and other components were added and mixed such that the content ratio (target ratio) of the infrared absorbing particles in the organic-inorganic hybrid infrared absorbing particles to be obtained ultimately would be 60% by mass. The addition ratio of each component when forming an aqueous phase was set to the values shown in Table 1.

Except for the above points, the organic-inorganic hybrid infrared absorbing particles and the printed matter for forgery prevention according to Comparative Example 1 were produced and evaluated in the same manner as in Example 1.

In the stirring step, the raw material mixture liquid prepared in the raw material mixture liquid preparation step was continuously stirred for a long time in an ice bath such that there would appear one peak in a scattering intensity-based particle size distribution of a mini-emulsion to be obtained, to be measured by the dynamic light scattering method. However, two peaks remained in the scattering intensity-based particle size distribution measured by the dynamic light scattering method, and the D50 did not become sufficiently small.

The product obtained through the polymerization step was observed by TEM. As a result, the surfaces of the infrared absorbing particles could not be coated with the coating resin, and the infrared absorbing particles could not be placed in resin capsules. That is, it was impossible to form organic-inorganic hybrid infrared absorbing particles.

The evaluation results are shown in Table 2.

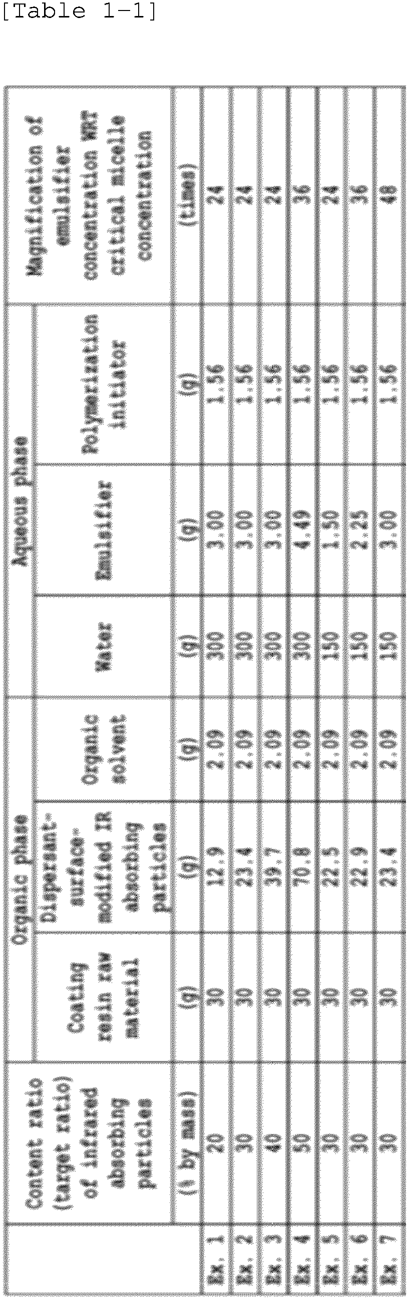

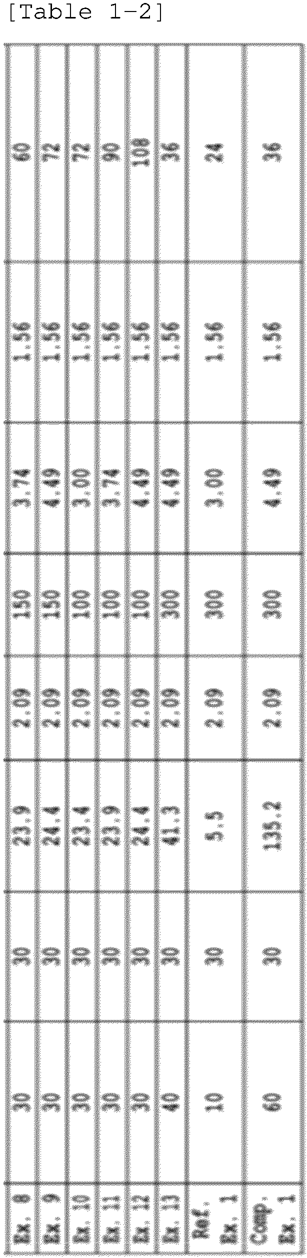

**[Table 2]**

| | Organic-inorganic hybrid infrared absorbing particles | | | Reflectance at wavelength of 1,000 nm before chemical resistance test | Reflectance difference at wavelength of 1,000 nm between before and after chemical resistance test |
|---|---|---|---|---|---|
| | Content ratio of IR absorbing particles | Scattering intensity-based D50 | Standard deviation | | |
| | (% by mass) | (nm) | (-) | (%) | (%) |
| Ex. 1 | 20 | 188 | 119 | 47 | 0.5 |
| Ex. 2 | 30 | 226 | 141 | 34 | 0.4 |
| Ex. 3 | 40 | 222 | 134 | 27 | 0.6 |
| Ex. 4 | 50 | 217 | 144 | 15 | 0.7 |
| Ex. 5 | 30 | 203 | 147 | 36 | 1.2 |
| Ex. 6 | 30 | 217 | 149 | 32 | 0.7 |
| Ex. 7 | 30 | 235 | 155 | 35 | 0.8 |
| Ex. 8 | 30 | 288 | 182 | 33 | 1.2 |
| Ex. 9 | 30 | 256 | 192 | 35 | 1.3 |
| Ex. 10 | 30 | 306 | 198 | 34 | 0.5 |
| Ex. 11 | 30 | 306 | 227 | 34 | 0.6 |
| Ex. 12 | 30 | 319 | 241 | 35 | 1.3 |
| Ex. 13 | 40 | 235 | 155 | 26 | 0.8 |
| Ref . Ex. 1 | 10 | 124 | 96 | 47 | 0.5 |
| Comp. Ex. 1 | 60 | 3,140 | 1,060 | - | - |

### [Evaluation]

According to the results shown in Table 2, it was confirmed that the reflectance at a wavelength of 1,000 nm on each piece of the forgery-proof printed matter of Examples 1 to 13 was lower than 50%, and they had a reflectance difference of 1.3% or less at the same wavelength between before and after the chemical resistance test. That is, it was confirmed that each piece of the forgery-proof printed matter and the forgery-proof ink compositions of Examples 1 to 13 had excellent infrared absorption characteristics and excellent chemical resistance characteristics.

On the other hand, although the forgery-proof printed matter of Reference Example 1 had an excellent reflectance difference of 1.3% or less at the wavelength of 1,000 nm between before and after the chemical resistance test, it was confirmed that ten pieces of produced printed matter were printed blurred and were inferior to Examples 1 to 13. This is considered to be due to the greater blending amount of the dry powder of the organic-inorganic hybrid infrared absorbing particles in the forgery-proof ink composition of Reference Example 1 than that in Example 1, etc., which made it difficult for the forgery-proof ink composition to spread during printing.

This application claims priority based on Japanese Patent Application No. 2022-170551 filed with the Japan Patent Office on October 25, 2022, and the entire contents of Japanese Patent Application No. 2022-170551 are incorporated in this international application.

### REFERENCE SIGNS LIST

20 organic-inorganic hybrid infrared absorbing particles
21 infrared absorbing particles
22 coating resin
221 resin capsule
30 forgery-proof ink composition
31 organic-inorganic hybrid infrared absorbing particles
32 liquid medium

## Claims

1. A forgery-proof ink composition, comprising:
organic-inorganic hybrid infrared absorbing particles; and
a liquid medium,
wherein the organic-inorganic hybrid infrared absorbing particles contain 15% by mass or greater and 55% by mass or less of infrared absorbing particles, and a coating resin coating at least parts of surfaces of the infrared absorbing particles.

2. The forgery-proof ink composition according to claim 1,
wherein the coating resin contains one or more types selected from polyester resin, polycarbonate resin, acrylic resin, polystyrene resin, polyamide resin, vinyl chloride resin, olefin resin, fluororesin, polyvinyl acetate resin, polyurethane resin, acrylonitrile-butadiene-styrene resin, polyvinyl acetal resin, acrylonitrile-styrene copolymer resin, ethylenevinyl acetate copolymer resin, phenol resin, epoxy resin, melamine resin, urea resin, unsaturated polyester resin, alkyd resin, polyimide resin, and silicone resin.

3. The forgery-proof ink composition according to claim 1 or 2,
wherein the infrared absorbing particles contain one or more types selected from tungsten oxides represented by a general formula W_{y}O_{z} (W: tungsten, O: oxygen, 2.2<z/y<2.999), and complex tungsten oxides represented by a general formula MₓW_{y}O_{z} (where an element M is one or more types selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I, 0.001≤x/y≤1, 2.0≤z/y<4.0).

4. Forgery-proof printed matter, comprising:
a print part containing the forgery-proof ink composition of claim 1 or 2.

5. The forgery-proof printed matter according to claim 4,
wherein the print part contains an organic binder.
